# EUROPEAN PATENT SPECIFICATION

(11) **EP 3 047 180 B1**
(45) Date of publication and mention of the grant of the patent: **18.10.2017**
(21) Application number: 14790800.8
(22) Date of filing: 16.09.2014
(51) Int. Cl.: F16J 1/09, F16J 1/22

(54) **PINLESS PISTON WITH GALLERY**
STIFTLOSER KOLBEN MIT GALERIE
PISTON SANS AXE DOTÉ D'UNE GALERIE

(30) Priority: 16.09.2013 US 201361878507 P
(43) Date of publication of application: 27.07.2016
(73) Proprietor: Federal-Mogul Corporation, Southfield, MI 48033 (US)
(72) Inventor: WEINENGER, Michael, Southfield, MI 48075 (US)
(74) Representative: Hoffmann Eitle
(86) International application number: PCT/US2014/055813
(87) International publication number: WO 2015/039080

(56) References cited:
- EP-A1- 1 538 373
- WO-A1-2011/001017
- US-A- 1 899 355

## Description

### TECHNICAL FIELD

This invention relates generally to internal combustion engines and more particularly to pistons and connecting members for internal combustion engines.

### BACKGROUND

It is known that internal combustion engines have piston and connecting rod assemblies requiring use of a wrist pin for operable connection of a small end of the connecting rod to the piston. In particular, piston constructions are known to include a piston body with a pair of pin bosses depending from a crown of the body to a pair of axially aligned pin bores spaced laterally from one another. To transmit rotational motion to linear motion of the piston, a large end of a connecting rod is attached to a crankshaft of the engine and a small end of the connecting rod is received between the pin bosses for operable attachment to the piston via a wrist pin. To facilitate reducing friction between the wrist pin and the pin bores, it is known to insert journal bearings within the pin bores. Although these piston and connecting rod assemblies are widely accepted and useful, continual efforts are made to attain certain goals, for example, to reduce weight, to improve manufacturing efficiencies and to reduce component costs.
Pistons are known that eliminate the need for a wrist pin connection between the connecting rod and the piston body. These piston constructions provide direct attachment of the piston body to the connecting rod. The piston has a boss depending from the crown of the piston body with a single bore formed in it with a cylindrical or spherical pocket. The connecting rod is constructed generally the same as in a conventional piston, with a shank extending to a small end. The small end, however, rather than providing a wrist pin bore, has an outer surface that extends laterally outwardly from sides of the shank to provide a cylindrical or spherical surface for receipt in the bore pocket.
WO 2011/001017 A1 relates to a piston which is provided with a bearing member having a curved bearing surface to be turnably engaged with an end part of the connecting rod provided with similar bearing surface. The bearing member has a ring-like shape with a cut-out at the side of the connecting rod. The end part of the connecting rod is arranged through the cut-out into the piston in a position, in which the end part of the connecting rod and the bearing member are essentially perpendicular with regard to each other. Then the connecting rod or the piston is moved further so that the end part of the connecting rod becomes in contact with the bearing member. Thereafter the end part of the connecting rod and the bearing member are arranged to their final position by means of relative turning movement between the connecting rod and the piston so that the mutual bearing surfaces are aligned and substantially correspond to each other. US 1,899,355 and EP 1 538 373 A1 are further prior art.

A piston constructed in accordance with the present invention, eliminates the need for a wrist pin, and provides further advancement in the attainment of the goals mentioned above, in addition to others that will be readily recognized by those skilled in the art of piston assemblies. It is also an object of the present invention to provide improved steel pistons which are relatively light in weight (i.e. have less mass) and which can be adequately cooled to prevent overheating.

### SUMMARY OF THE INVENTION

The invention is defined by the independent claims.

A piston and connecting rod assembly includes a piston body extending along a central axis with an upper crown and a boss depending from the crown along the central axis. The boss has opposite sides extending along opposite sides of the central axis to a free end, as well as a pocket for receipt of the small end of a connecting rod. The boss further includes an opening extending through the free end into the pocket. The assembly further includes a connecting rod terminating at a small end with a ball-type shape configured for receipt in the pocket and with a shank extending to the other end configured for operable attachment to a crankshaft.

The piston is made of a steel material which provides strength and durability, and which can withstand higher temperatures and pressures than non-steel pistons. The pistons are made in two parts, an upper crown portion and a lower boss or body portion. One or both parts can be made by a forging or equivalent manufacturing process. The upper crown portion contains all or a portion of the combustion bowl, and can contain one or more of the ring grooves on the side wall portion. The lower body portion contains the side walls and can contain one or more of the ring grooves.

The two portions are permanently bonded together, such as by friction welding or induction welding. A cooling gallery is provided between the crown portion and body portion. Oil circulated into and through the cooling gallery maintains the upper crown portion and its rim from overheating.

During assembly of the piston and connecting rod in accordance with one embodiment of the invention, the ball end is inserted from the lower open end of the boss rotated 90° from the operating position of the connecting rod. This allows the flat portion of the ball end to enter the pocket. The rod is then rotated 90° to its operating position. A pair of C-clips are installed in place to prevent the piston from rotating relative to the rod.

Another embodiment of the invention includes a connecting rod with a cylindrical member at the upper or small end, and a piston member with a cylindrically shaped socket. In this embodiment, the connecting rod is connected to the piston member by sliding the small end into the socket transverse to the longitudinal direction of the connecting rod.

A piston and connecting rod assembly manufactured in accordance with the present invention, among other things that will be readily recognized by one of ordinary skill in the art of pistons, reduces the number of components in the piston assembly, reduces the compression height of the piston assembly, decreases the reciprocating mass of the piston assembly, and provides the piston assembly and associated components with a long and useful life.

Other features and details of the present invention will become apparent from the following description of the invention when viewed in accordance with the attached drawings and appended claims.

### BRIEF DESCRIPTION OF THE DRAWINGS

These and other aspects, features and advantages of the invention will become readily apparent to those skilled in the art in view of the following detailed description of the presently preferred embodiments, appended claims, and accompanying drawings, in which:
FIGURE 1 is a partial cut-away perspective view of an exemplary embodiment of a piston and connecting rod in accordance with the present invention.
FIGURE 2 is a cross-sectional view of the exemplary embodiment of the present invention as shown in Figure 1.
FIGURE 3 is a cross-sectional view of the exemplary embodiment of the present invention as shown in Figure 1.
FIGURE 4 is a cross-sectional view of the embodiment shown in Figure 3, the cross-section being taken along line 4-4 in Figure 3 and in the direction of the arrows.
FIGURE 5 is another perspective view of the Figure 1 exemplary embodiment of a piston and connecting rod in accordance with the present invention.
FIGURES 6, 7 and 8 depict an alternate embodiment of the present invention.

### DESCRIPTION OF THE PREFERRED EMBODIMENTS

Referring to the drawings, wherein like numerals indicate corresponding parts throughout the several views, a piston and connecting rod assembly 10 is shown. This assembly 10 is only an exemplary embodiment of the present invention and is not to be viewed as the only embodiment of the invention. The present invention is only to be limited by the scope of the claims as they eventually are issued in a patent, and not by any feature or details as shown in the drawings or as specifically described in the following description.

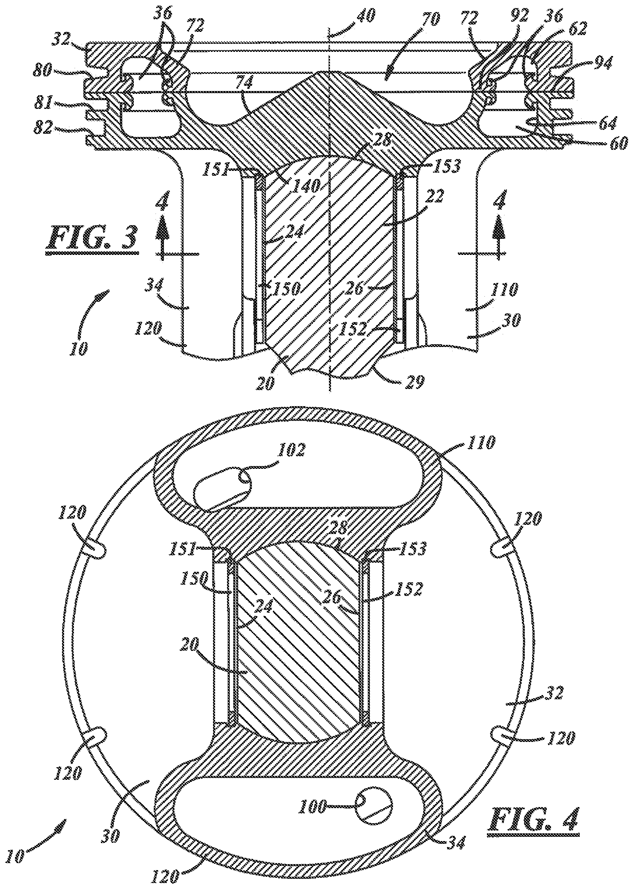

The assembly 10 includes a piston 30 and a connecting rod 20. The piston 30 has a central elongated axis 40. The connecting rod 20 also has a central elongated axis 50. The two axes are in alignment when the connecting rod is located perpendicular to the piston, as shown in Figure 3.

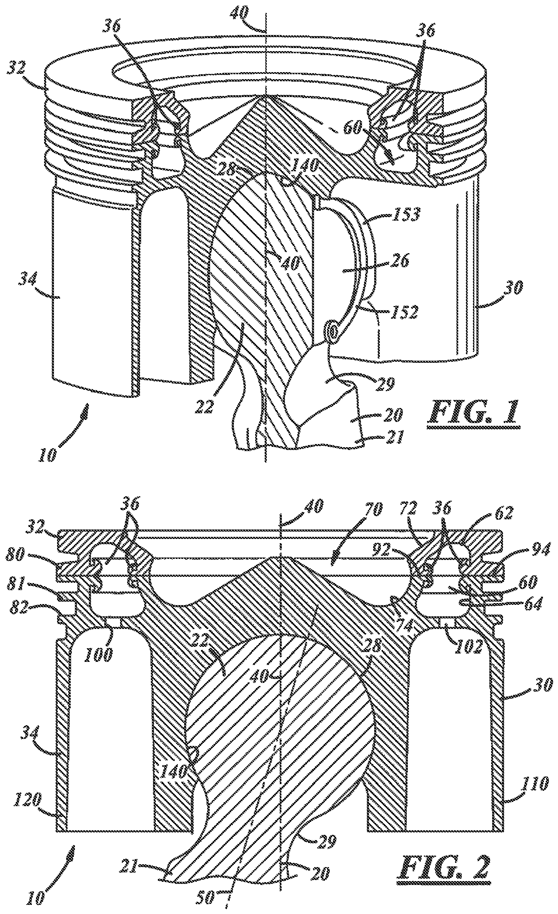

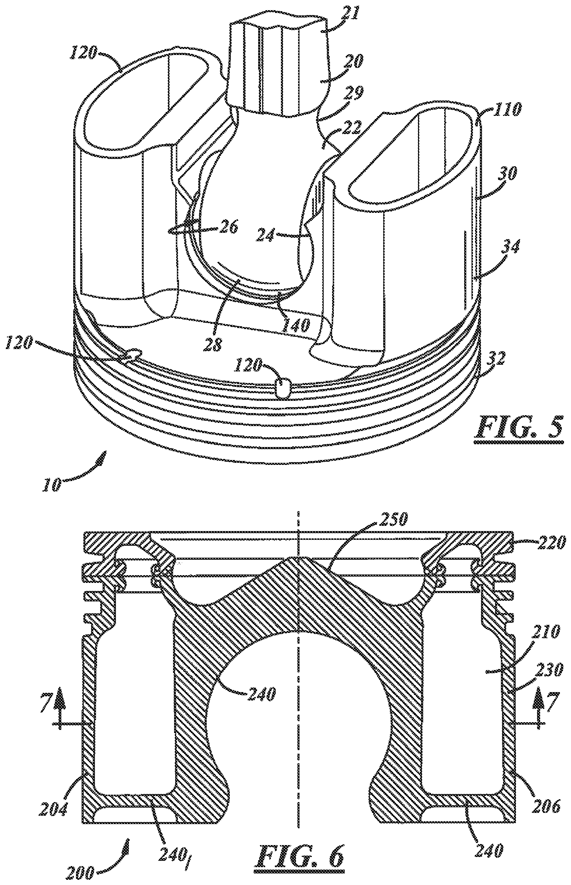

In the drawings, Figure 1 is a partial cut-away exemplary embodiment of the assembly 10. The depiction has a cut-away section in order to expose the connection of the piston and connecting rod in a clearer manner. Figures 2 and 3 are cross-sections of the exemplary embodiment shown in Figure 1, with the two cross-sections being taken 90° to each other. Figure 4 is a cross-sectional view taken along line 4-4 in Figure 3 and looking up toward the crown from the bottom of the piston. Figure 5 is a perspective view of the Figure 1 embodiment viewing the assembly 10 generally from the bottom of the piston.

The connecting rod 20 is used to connect the piston to the crankshaft of the engine (not shown). The connecting rod has a large end (not shown) that attaches the rod to the crankshaft. The large end of the connecting rod is the same or similar to connecting rods well known today and does not need any further description here.

The upper or small end 22 of the connecting rod 20 is shown in Figures 1-3 and 5. The small end 22 is also called the "ball end" of a connecting rod. The ball end 22 has two flat sides 24 and 26, and a spherical shaped portion 28 in-between the two flat sides. The connecting rod 20 also preferably has a narrow "neck-type" portion 29 between the main stem 21 of the rod 20 and the ball end 22.

The connecting rod 20 is typically made of a steel or durable metal material and can be made from a machined, forged or powered metal process, all as known in the industry.

The piston member 30 is made of two parts, an upper or crown portion 32 and a lower or body portion 34. The body portion is also called the skirt portion. Both portions are made of a steel material and preferably made by a forging process. The two parts 32 and 34 are machined and finished as necessary and then permanently bonded together to form the piston member 30. The two parts are preferably joined together by friction welding or induction welding. The curved tailings 36 shown in Figure 1-3 are typical of a friction welding process.

A cooling gallery 60 is formed in the piston member 30 when the crown portion 32 and body portion 34 are bonded together. The upper portion 62 of the cooling gallery is formed in the crown portion 32 and the lower portion 64 is formed in the body portion 34. In the exemplary embodiment shown, the combustion bowl 70 is also formed by two portions 72 and 74 included in the two piston parts 32 and 34. In other embodiments, the combustion bowl could be formed entirely in the crown portion, or in the lower portion.

In addition, in the exemplary embodiment shown, grooves 80, 81, 82 for the piston rings are provided in part in each of the two portions 32 and 34. It is possible in other embodiments to include all of the ring grooves in one or the other of the crown portion or skirt portion.

In order to effectively friction weld together the crown portion and lower portion mating annular surfaces 92 and 94 are provided. This is particularly shown in Figures 2 and 3.

Once the two portions are bonded together, the outer sidewall surface and combustion bowl surface are machined which removes the tailing residues which are formed from the bonding process. The curved tailings 36 in the cooling gallery 60 are not removed.

In order to allow cooling oil to be introduced into the cooling gallery and to be drained from it, openings 100 and 102 are provided. These are typically drilled or machined before the two parts of the piston are bonded together. These are also shown in Figure 4. Opening 102 is an ingress opening and can have an oval shape as shown, particularly if the oil jet supplying the oil sprays the oil from an angle.

When the lower portion is formed, it preferably has two opposing elongated boss members 110 and 120. These are preferably hollow generally cylindrically shaped members as shown in Figure 5. The members add the structure and sidewalls needed to form the piston 30 and are hollow principally to decrease the weight and mass of the piston. The hollow boss members 110 and 120 also allow access to the cooling gallery to form the oil ingress and egress openings 100 and 102.

Although two openings are shown in the cooling gallery to introduce and drain the oil, the precise number is not critical. The number, size and shape of the openings, also do not have to be the same for ingress and egress of the oil.

The cooling gallery 60 shown in the preferred embodiment is a "closed" oil gallery. It is also possible in accordance with an alternate embodiment of the invention, to provide an "open" gallery without a floor member.

A plurality of slots 120 are provided in the piston 30 in order to drain oil from the lowermost ring groove 81. These are depicted in Figures 4 and 5.

The socket 140 (also called "pocket") in the piston from the ball end 22 of the connecting rod 20 is machined in the lower portion 34 of the piston and immediately below the combustion bowl 70. As shown in the drawings, the pocket is spherically shaped in order to conform to the curved surface 28 on the ball end. When the piston assembly 10 is in use in an engine, the ball end pivots in the pocket during each stroke.

A pair of C-clips 150, 152 are provided to prevent the connecting rod 20 from separating form the piston member 30. The C-clips are positioned in grooves 151, 153 formed in the power portion 34. Other methods of securing and holding the connecting rod in the piston body could also be used.

When the piston assembly 10 is assembled, the connecting rod 20 is longitudinally rotated 90° from its operating position so that the ball end can be positioned in the pocket 140. Once the end of the ball end 22 is positioned in the pocket, the rod 20 is rotated longitudinally 90° to its operating position. This is shown in Figures 1-3 and 5. Thereafter, the C-clips 150 152 are installed in position to prevent any further relative longitudinal rotation of the rod 20 relative to the piston member 30.

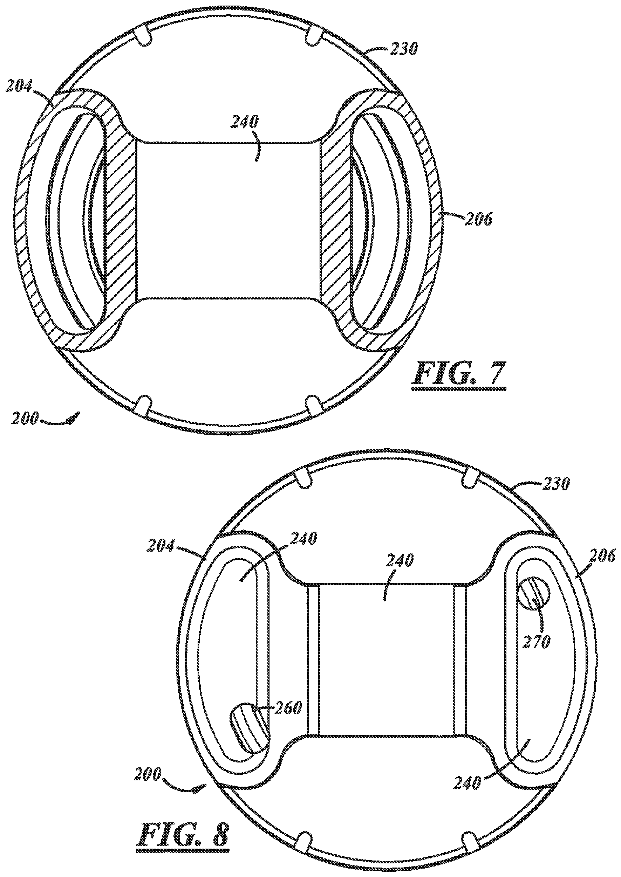

Figures 6-8 depict an alternate embodiment of the invention. Figure 6 is a cross-sectional view, Figure 7 is a view taken along lines 7-7 in Figure 6 and in the direction of the arrows, and Figure 8 is a view of the bottom of the piston.

The alternate piston embodiment is referred to by the numeral 200. The piston 200 differs from the piston embodiment 10 described above principally with respect to the size and structure of the cooling gallery 210. Other features of the piston 200, including bonding two forged sections (crown portion 220 and lower body portion 230) together, providing a pocket 240 for a ball-type end of a connecting rod, retaining the ball-type end in the piston by retaining members, are all the same as described above.

The cooling gallery 210 extends substantially the full length (height) of the boss members 204 and 206. The bottom walls 240 of the cooling gallery 210 are located at the lower ends of the boss members 204, 206, that is at the opposite end of the piston from the crown portion 200 and combustion bowl 250.

Openings 260 and 270 are produced in the bottom walls 240 for ingress and egress of cooling oil into and from the cooling gallery 210. These are substantially the same as openings 100 and 102 described above with respect to Figures 1-5.

The positions of the lower walls 240 in the boss members 204 and 206 allows the oil in the cooling gallery 210 to reach a higher velocity before striking or making contact with the upper surfaces of the cooling gallery which can increase the cooling effect of the oil.

In addition, since the lower walls 240 of the cooling gallery are positioned near the bottom of the skirt portion, the skirt will be stiffer. With a stiffer bottom of the skirt, the piston should rock less during operation.

Positioning the lower gallery wall at or near the bottom of the skirt portion also benefits machining the piston. It will allow better tolerances since the deflection of the bottom of the skirt is reduced.

Another embodiment of the invention is indicated generally at 300. The assembly 300 includes a piston member 310 and a connecting rod 320.

The piston member 310 is similar to the piston members described above with respect to how it is formed and the material from which it is made. The piston member 310 also has a cooling gallery 312 which is essentially the same as, and made in the same way as, the cooling galleries discussed and depicted above.

The piston member 310 differs from the piston members discussed above relative to its socket 314 (or "pocket") and the manner in which the connecting rod 320 is connected to it. The socket has an opening which is cylindrically-shaped and matches the cylindrically-shaped ball 322 on the small end of the connecting rod 320.

The connecting rod 320 has an elongated shaft member 324, only a portion of which is depicted, and a ball member 322 at its small end. The ball has a cylindrical shape.

When the connecting rod 320 is assembled to the piston member 310, the ball member 322 is inserted into the socket 314 from the side, that is, in a direction transverse to the longitudinal direction of the connecting rod. The ball member 322 is only partially inserted into the socket.

The lower ends 315, 316 of the socket hold the connecting rod in place in the longitudinal direction. The ends 315, 316 extend into the area formed by the neck 326 of the connecting rod.

Preferably, the two sides 328 of the cylindrically-shaped ball 322 have one or more recesses or depressions 330. The recesses decrease the weight and mass of the connecting rod.

Although the invention has been described with respect to preferred embodiments, it is to be also understood that it is not to be so limited since changes and modifications can be made therein which are within the full scope of this invention as detailed by the following claims.

## Claims

1. A piston and connecting rod assembly comprising:
a piston body (30) having an upper crown member (32,220) and a lower body portion (34,230), said upper crown member (32,220) and lower body portion (34,230) being integrally bonded together to form a one-piece piston body (30);
said piston body having a cooling gallery (60,210) formed between said upper crown member (32,220) and said lower body portion (34,230);
said lower body portion (34,230) having a piston boss (110,120) said boss including a pocket (140) for receipt of a connecting rod (20) and grooves (151, 153);
a connecting rod (20) having a ball-type end (22), said ball-type end (22) being positioned in said pocket (140),
further comprising fastener members for securing said ball-type end (22) of said connecting rod (20) in said pocket and preventing rotation of said piston body around a longitudinal axis of said connecting rod (20),
**characterised in that** said fastener members comprise C-clips (150,152) and are positioned in the grooves (151,153) in said boss (110,120).

2. The piston and connecting rod assembly as described in claim 1 wherein said cooling gallery (60) comprises a closed gallery.

3. The piston and connecting rod assembly as described in claim 2 further comprising a plurality of openings (100, 102) in said cooling gallery for ingress and egress of oil.

4. The piston and connecting rod assembly as described in claim 1 wherein said ball-type end (22) of said connecting rod has two opposed planar surfaces (26) and a first curved surface (28) therebetween.

5. The piston and connecting rod assembly as described in claim 4 wherein said pocket in said boss has a second curved surface corresponding in shape to said first curved surface (28).

6. The piston and connecting rod assembly as described in claim 1 wherein said ball-type end (22) has a width substantially equal to the width of said pocket (140).

7. The piston and connecting rod assembly as described in claim 1 wherein said ball-type end has a pair of planar surfaces and is adapted to be positioned initially in said pocket 90° from a final operating position.

8. The piston and connecting rod as described in claim 1 further comprising a plurality of piston ring grooves (80,81,82) in said piston body.

9. The piston and connecting rod as described in claim 8 wherein at least one of said piston ring grooves (80) are located in said crown member.

10. The piston and connecting rod as described in claim 1 wherein said ball-type end is cylindrically shaped.

11. The piston and connecting rod as described in claim 10 wherein said ball-type end (22) has two substantially planar side surfaces, and a curved, cylindrically shaped peripheral outer surface.

12. The piston and connecting rod as described in claim 11 further comprising at least one recess in at least one of said two side surfaces.

13. The piston and connecting rod as described in claim 11 further comprising at least one recess in each of said side surfaces.

14. A piston comprising:
a piston body having an upper crown member (32) and a lower body portion (230), said upper crown member (32) and lower body portion (230) being integrally bonded together to form a one-piece piston body;
said piston body having a cooling gallery (60) formed between said upper crown member (32) and said lower body portion (230); and
said lower body portion (230) having a piston boss, said boss including a pocket (140) for receipt of a connecting rod,
further comprising a pair of grooves (151, 153) adjacent said pocket, **characterised in that** said grooves (151, 153) are adapted to receive C-clip fasteners (152) for securing a connection rod in place and preventing rotation of said connection rod about a longitudinal axis of the piston.

15. The piston as described in claim 14 wherein said cooling gallery (60) comprises a closed gallery.

16. The piston as described in claim 15 further comprising a plurality of openings (100, 102) in said cooling gallery for ingress and egress of oil.

17. The piston as described in claim 14 wherein said pocket (140) is cylindrically-shaped.

## Patentansprüche

1. Kolben- und Pleuelstangeneinheit, umfassend:
einen Kolbenkörper (30) mit einem oberen Kronenelement (32, 220) und einem unteren Körperabschnitt (34, 230), wobei das obere Kronenelement (32, 220) und der untere Körperabschnitt (34, 230) ganzheitlich miteinander verbunden sind, um einen einteiligen Kolbenkörper (30) zu bilden;
wobei der Kolbenkörper einen Kühlkanal (60, 210) hat, der zwischen dem oberen Kronenelement (32, 220) und dem unteren Körperabschnitt (34, 230) gebildet ist, der untere Körperabschnitt (34,230) ein Kolbenauge (110, 120) hat, das Auge aufweisend eine Aussparung (140) zur Aufnahme einer Pleuelstange (20) und Nuten (151, 153);
eine Pleuelstange (20) mit einem Kugelkopfende (22), wobei das Kugelkopfende (22) in der Aussparung (140) positioniert ist,
weiter umfassend Befestigungselemente zum Befestigen des Kugelkopfendes (22) der Pleuelstange (20) in der Aussparung und Verhindern einer Drehung des Kolbenkörpers um eine Längsachse der Pleuelstange (20),
**dadurch gekennzeichnet, dass** die Befestigungselemente C-förmige Klammern (150, 152) umfassen und in den Nuten (151, 152) in dem Auge (110, 120) positioniert sind.

2. Kolben- und Pleuelstangeneinheit nach Anspruch 1, wobei der Kühlkanal (60) einen geschlossenen Kanal umfasst.

3. Kolben- und Pleuelstangeneinheit nach Anspruch 2, weiter umfassend eine Vielzahl von Öffnungen (100, 102) in dem Kühlkanal für den Ein- und Auslass von Öl.

4. Kolben- und Pleuelstangeneinheit nach Anspruch 1, wobei das Kugelkopfende (22) der Pleuelstange zwei gegenüberliegende ebene Flächen (26) und eine erste gewölbte Fläche (28) dazwischen hat.

5. Kolben- und Pleuelstangeneinheit nach Anspruch 4, wobei die Aussparung in dem Auge eine zweite gewölbte Fläche hat, deren Form der ersten gewölbten Fläche (28) entspricht.

6. Kolben- und Pleuelstangeneinheit nach Anspruch 1, wobei das Kugelkopfende (22) eine Breite hat, die im Wesentlichen gleich wie die Breite der Aussparung (140) ist.

7. Kolben- und Pleuelstangeneinheit nach Anspruch 1, wobei das Kugelkopfende ein Paar ebener Flächen hat und angepasst ist, um anfangs in der Aussparung 90° von einer endgültigen Betriebsstellung positioniert zu werden.

8. Kolben und Pleuelstange nach Anspruch 1, weiter umfassend eine Vielzahl von Kolbenringnuten (80, 81, 82) in dem Kolbenkörper.

9. Kolben und Pleuelstange nach Anspruch 8, wobei sich mindestens eine der Kolbenringnuten (80) in dem Kronenelement befindet.

10. Kolben und Pleuelstange nach Anspruch 1, wobei das Kugelkopfende zylindrisch geformt ist.

11. Kolben und Pleuelstange nach Anspruch 10, wobei das Kugelkopfende (22) zwei im Wesentlichen ebene Seitenflächen und eine gewölbte, zylindrisch geformte periphere Außenfläche hat.

12. Kolben und Pleuelstange nach Anspruch 11, weiter umfassend mindestens eine Vertiefung in mindestens einer der zwei Seitenflächen.

13. Kolben und Pleuelstange nach Anspruch 11, weiter umfassend mindestens eine Vertiefung in jeder der Seitenflächen.

14. Kolben, umfassend:
einen Kolbenkörper mit einem oberen Kronenelement (32) und einem unteren Körperabschnitt (230), wobei das obere Kronenelement (32) und der untere Körperabschnitt (230) ganzheitlich miteinander verbunden sind, um einen einteiligen Kolbenkörper zu bilden;
der Kolbenkörper einen Kühlkanal (60) hat, der zwischen dem oberen Kopfelement (32) und dem unteren Körperabschnitt (230) gebildet ist; und
der untere Körperabschnitt (230) ein Kolbenauge aufweist, das Auge aufweisend eine Aussparung (140) zur Aufnahme einer Pleuelstange,
weiter umfassend ein Paar Nuten (151, 153) anliegend an der Aussparung, **dadurch gekennzeichnet, dass** die Nuten (151, 153) angepasst sind, um C-förmige Befestigungsklammern (152) aufzunehmen, um eine Pleuelstange an ihrer Stelle zu halten und um eine Drehung der Pleuelstange um eine Längsachse des Kolbens zu verhindern.

15. Kolben nach Anspruch 14, wobei der Kühlkanal (60) einen geschlossenen Kanal umfasst.

16. Kolben nach Anspruch 15, weiter umfassend eine Vielzahl von Öffnungen (100, 102) in dem Kühlkanal für den Ein- und Auslass von Öl.

17. Kolben nach Anspruch 14, wobei die Aussparung (140) zylindrisch geformt ist.

## Revendications

1. Ensemble piston et bielle comprenant :
un corps de piston (30) ayant un élément formant couronne supérieure (32, 220) et une portion de corps inférieure (34, 230), ledit élément formant couronne supérieure (32, 220) et ladite portion de corps inférieure (34, 230) étant ensemble liés d'un seul tenant pour former un corps de piston d'une seule pièce (30) ;
ledit corps de piston ayant une galerie de refroidissement (60, 210) formée entre ledit élément formant couronne supérieure (32, 220) et ladite portion de corps inférieure (34, 230) ;
ladite portion de corps inférieure (34, 230) ayant une protubérance de piston (110, 120), ladite protubérance incluant une poche (140) pour la réception d'une bielle (20) et des rainures (151, 153) ;
une bielle (20) ayant une extrémité de type à boule (22), ladite extrémité de type à boule (22) étant positionnée dans ladite poche (140),
comprenant en outre des éléments de fixation pour fixer ladite extrémité de type à boule (22) de ladite bielle (20) dans ladite poche et empêcher la rotation dudit corps de piston autour d'un axe longitudinal de ladite bielle (20),
**caractérisé en ce que** lesdits éléments de fixation comprennent des agrafes en C (150,152) et sont positionnés dans les rainures (151,153) dans ladite protubérance (110, 120).

2. Ensemble piston et bielle selon la revendication 1, dans lequel ladite galerie de refroidissement (60) comprend une galerie fermée.

3. Ensemble piston et bielle selon la revendication 2, comprenant en outre une pluralité d'ouvertures (100, 102) dans ladite galerie de refroidissement pour l'entrée et la sortie d'huile.

4. Ensemble piston et bielle selon la revendication 1, dans lequel ladite extrémité de type à boule (22) de ladite bielle comporte deux surfaces planes opposées (26) et une première surface incurvée (28) entre ces dernières.

5. Ensemble piston et bielle selon la revendication 4, dans lequel ladite poche dans ladite protubérance comporte une seconde surface incurvée dont la forme correspond à ladite première surface incurvée (28).

6. Ensemble piston et bielle selon la revendication 1, dans lequel ladite extrémité de type à boule (22) a une largeur sensiblement égale à la largeur de ladite poche (140).

7. Ensemble piston et bielle selon la revendication 1, dans lequel ladite extrémité de type à boule comporte un couple de surfaces planes et est conçue pour être initialement positionnée dans ladite poche à 90° par rapport à une position finale de fonctionnement.

8. Piston et bielle selon la revendication 1, comprenant en outre une pluralité de rainures de segment de piston (80, 81, 82) dans ledit corps de piston.

9. Piston et bielle selon la revendication 8, dans lequel au moins une desdites rainures de segment de piston (80) est située dans ledit élément formant couronne.

10. Piston et bielle selon la revendication 1, dans lesquels ladite extrémité de type à boule est de forme cylindrique.

11. Piston et bielle selon la revendication 10, dans lesquels ladite extrémité de type à boule (22) comporte deux surfaces latérales sensiblement planes et une surface extérieure périphérique incurvée, de forme cylindrique.

12. Piston et bielle selon la revendication 11, comprenant en outre au moins un évidement dans au moins une desdites deux surfaces latérales.

13. Piston et bielle selon la revendication 11, comprenant en outre au moins un évidement dans chacune desdites surfaces latérales.

14. Piston comprenant :
un corps de piston ayant un élément formant couronne supérieure (32) et une portion de corps inférieure (230), ledit élément formant couronne supérieure (32) et ladite portion de corps inférieure (230) étant liés ensemble d'un seul tenant pour former un corps de piston d'une seule pièce ;
ledit corps de piston ayant une galerie de refroidissement (60) formée entre ledit élément formant couronne supérieure (32) et ladite portion de corps inférieure (230) ; et
ladite portion de corps inférieure (230) ayant une protubérance de piston, ladite protubérance incluant une poche (140) pour la réception d'une bielle,
comprenant en outre un couple de rainures (151, 153) adjacentes à ladite poche,
**caractérisé en ce que**
lesdites rainures (151, 153) sont conçues pour recevoir des fixations formant agrafes en C (152) pour fixer une bielle en place et empêcher une rotation de ladite bielle autour d'un axe longitudinal du piston.

15. Piston selon la revendication 14, dans lequel ladite galerie de refroidissement (60) comprend une galerie fermée.

16. Piston selon la revendication 15, comprenant en outre une pluralité d'ouvertures (100, 102) dans ladite galerie de refroidissement pour l'entrée et la sortie d'huile.

17. Piston selon la revendication 14, dans lequel ladite poche (140) est de forme cylindrique.
